(19) **Europäisches Patentamt / European Patent Office / Office européen des brevets**

(11) **EP 2 149 741 B1**

(12) **EUROPEAN PATENT SPECIFICATION**

(45) Date of publication and mention
of the grant of the patent:
**12.09.2012 Bulletin 2012/37**

(21) Application number: **08710560.7**

(22) Date of filing: **22.01.2008**

(51) Int Cl.:
*F21S 2/00* (2006.01)    *F21V 17/00* (2006.01)
*G02F 1/13357* (2006.01)

(86) International application number:
**PCT/JP2008/050752**

(87) International publication number:
**WO 2008/146499 (04.12.2008 Gazette 2008/49)**

(54) **LIGHTING APPARATUS, DISPLAY APPARATUS AND TV RECEIVER**

BELEUCHTUNGSVORRICHTUNG, ANZEIGEVORRICHTUNG UND FERNSEHEMPFÄNGER

APPAREIL D'ÉCLAIRAGE, APPAREIL D'AFFICHAGE ET RÉCEPTEUR TV ASSOCIÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.05.2007   JP 2007145382**

(43) Date of publication of application:
**03.02.2010   Bulletin 2010/05**

(73) Proprietor: **Sharp Kabushiki Kaisha
Osaka-shi, Osaka 545-8522 (JP)**

(72) Inventor: **KUROMIZU, Yasumori
Osaka 545-8522 (JP)**

(74) Representative: **Müller - Hoffmann & Partner
Patentanwälte
Innere Wiener Strasse 17
81667 München (DE)**

(56) References cited:
**JP-A- 2004 186 080      JP-A- 2007 128 887
JP-A- 2007 157 450      US-A1- 2002 044 437
US-A1- 2007 013 825**

## Description

### Technical Field

The present invention relates to a lighting apparatus that illuminates a display panel such as a liquid crystal panel, and to a display apparatus and a television receiver employing such a lighting apparatus.

### Background Art

A conventional display apparatus is disclosed in Patent Document 1. Fig. 9 is a side sectional view schematically showing the display apparatus. The display apparatus 1 has a lighting apparatus 3 that faces a display panel 2. The lighting apparatus 3 is provided with a back chassis 4 - formed of metal -, which is open at the display panel 2-side and covers the rear side of the lighting apparatus 3. Inside the back chassis 4, a plurality of light sources 5 comprising long-length fluorescent tubes are arranged side by side.

At the open side of the back chassis 4, a diffusion plate 7 facing the light sources 5 is disposed. The diffusion plate 7 has its periphery held by the back chassis 4 and diffuses light emitted from the light sources 5 so as to make light for illuminating the display panel 2 uniform. In addition, the diffusion plate 7 is supported by diffusion-plate supporting pins 10 having a sharp point, which are fitted to the back chassis 4.

As the diffusion-plate supporting pins 10, a plurality of them are provided between the light sources 5 so that the diffusion plate 7 and the light sources 5 are kept apart. This prevents the light sources 5 reflected in display images, which is caused by the diffusion plate 7 being thermally deformed by the heat from the light sources 5 and coming closer to the light sources 5.

Patent Document 1: JP-A-2005-347005 (pages 4 to 9, Fig. 2)

US 2002/044437 A1 teaches a backlight assembly for a liquid crystal display device including at least one or more diffusion plate supporting members disposed between a reflection sheet and a diffusion plate, and having a complex structure including an elastic material in contact with the diffusion plate. The diffusion plate supporting member prevents the diffusion plate from dropping down. The protective member 61, which is an elastic member, is provided at the tip of the supporting pin 65, and it is smaller in the diameter than the base part of the supporting pin 65. Thus, it cannot absorb shock on collision with a light source, which may be a fluorescent lamp, resulting in the light source being broken.

## Disclosure of the Invention

### Problems to be Solved by the Invention

According to the above-described conventional display apparatus 1, however, the light sources 5 may disadvantageously collide with the diffusion-plate supporting pins 10 and brake when shock acts on the display apparatus 1 during transportation etc. In particular, on arranging display screens vertically, when the light sources 5 extend horizontally and are arranged side by side in the vertical direction, the light sources 5 are likely to collide with the diffusion-plate supporting pins 10 due to deflection caused by their own weight.

An object of the present invention is to provide a lighting apparatus in which breakage of a light source can be prevented, and to provide a display apparatus and a television receiver that employ such a lighting paratus.

### Means for Solving the Problem

This is achieved by the subject matter of the independent claims.

To achieve the above object, according to the present invention, a lighting apparatus comprises: a back chassis covering the rear side of the lighting apparatus; a light source comprising a fluorescent tube held on the back chassis, the fluorescent tube having parts extending in one direction arranged side by side in a direction perpendicular to the direction of extension; a diffusion plate arranged to face the light source to diffuse light emitted from the light source; a diffusion-plate supporting pin arranged upright between adjacent parts of the light source to support the diffusion plate; and a protective member arranged around the diffusion-plate supporting pin and formed of a shock absorbing material absorbing shock by elasticity.

With this arrangement, the back chassis covers the rear side of the lighting apparatus and holds the light source comprising a fluorescent tube. The light source comprising a plurality of fluorescent tubes or a meandering fluorescent tube that, preferably, has parts extending horizontally to be arranged side by side in the vertical direction. Between adjacent parts of the light source, the diffusion-plate supporting pin that is fitted to the back chassis is arranged, and the diffusion plate facing the light source makes contact with the diffusion-plate supporting pin to be supported thereby. By application of a voltage, light emitted from the light source is diffused by the diffusion plate and illuminates a display panel that faces the diffusion plate. The diffusion-plate supporting pin is provided with the protective member that covers around it. The protective member is formed of a shock absorbing material such as resin or rubber, and absorbs shock when the light source collides with it.

Moreover, in the lighting apparatus arranged as described above, a projection is provided on the circumferential surface of the diffusion-plate supporting pin, and the protective member through which the diffusion-plate supporting pin is inserted has its diffusion plate-side locked by the projection. With this arrangement, the tubular protective member is put on the diffusion-plate supporting pin from its tip. Passing the projection, the protective member is arranged on the base side of the projection, and has its diffusion plate-side locked by the projection so that it does not come off.

According to the invention, in the lighting apparatus arranged as described above, the outer circumference surface of the diffusion-plate supporting pin is formed to have a taper shape, and the inner circumference surface of the protective member through which the diffusion-plate supporting pin is inserted is formed to have a taper shape.

Moreover, according to the invention, in the lighting apparatus arranged as described above, a concave part and a convex part are formed at the outer circumference surface of the protective member through which the diffusion-plate supporting pin is inserted.

Moreover, according to the invention, in the lighting apparatus arranged as described above, parts of the light source extend in the horizontal direction arranged side by side in the vertical direction.

Moreover, according to the invention, in the lighting apparatus arranged as described above, the protective member is formed to be transparent, white/whitish, or gray/grayish.

Moreover, according to the invention, in the lighting apparatus arranged as described above, the protective member is formed of microcell polymer. With this arrangement, the protective member is formed of microcell polymer, which is a shock absorbing material such as PORON (manufactured by Rogers Inoac Corporation).

Moreover, according to the invention, in the lighting apparatus arranged as described above, the protective member is formed of foamed polyethylene.

Moreover, according to the invention, in the lighting apparatus arranged as described above, the protective member is formed of rubber sponge.

Moreover, according to the invention, in the lighting apparatus arranged as described above, the protective member is formed of silicon-based gel.

Moreover, the display apparatus according to the invention comprises the lighting apparatus arranged as described above and the display panel that faces the diffusion plate.

Moreover, according to the invention, in the display apparatus arranged as described above, the display panel is built with a liquid crystal panel having a pair of substrates with liquid crystal sealed in between.

Moreover, a television receiver according to the invention comprises the display apparatus arranged as described above.

**Advantages of the Invention**

According to the present invention, the protective member arranged around the diffusion-plate supporting pin that supports the diffusion plate is formed of a shock absorbing material; thus, it is possible to prevent breakage of the light source caused by the light source colliding with the diffusion-plate supporting pin when shock acts on the lighting apparatus.

According to the invention, the protective member through which the diffusion-plate supporting pin is inserted is locked by the projection provided on the circumference surface of the diffusion-plate supporting pin; thus, the protective member can be easily prevented from coming off.

According to the invention, the outer circumferential surface of the diffusion-plate supporting pin and the inner circumferential surface of the protective member are formed to have a taper shape; thus, the protective member can be positioned easily in the height direction. Moreover, the area increases where the diffusion-plate supporting pin is in contact with the protective member, and, by friction, the protective member can be easily prevented from coming off.

Moreover, according to the invention, a concave part and a convex part are formed at the outer circumferential surface of the protective member, making it easy to hold the protective member with fingers. Accordingly, it is possible to improve workability when putting the protective member on the diffusion-plate supporting pin.

Moreover, according to the invention, even though the light source is likely to collide with the diffusion-plate supporting pin due to its own weight, since parts of the light source extend in the horizontal direction arranged side by side in the vertical direction, it is possible to surely prevent breakage of the light source caused by collision.

Moreover, according to the invention, the protective member is formed to be transparent, white/whitish, or gray/grayish; thus, it is possible to prevent degraded image quality caused by the protective member reflected in the display panel.

Moreover, according to the invention, the protective member is formed of microcell polymer; thus, it is possible to easily realize a protective member absorbing shock.

Moreover, according to the invention, the protective member is formed of foamed polyethylene; thus, it is possible to easily realize a protective member absorbing shock.

Moreover, according to the invention, the protective member is formed of rubber sponge; thus, it is possible to easily realize a protective member absorbing shock.

Moreover, according to the invention, the protective member is formed of silicon-based gel; thus, it is possible to easily realize a protective member absorbing shock.

## Brief Description of Drawings

[Fig. 1] A side sectional view showing a display apparatus embodying the present invention;

[Fig. 2] A perspective view showing a protective member of the display apparatus embodying the invention;

[Fig. 3] A plan view showing how light sources of the display apparatus embodying the invention are supported;

[Fig. 4] A perspective view showing another protective member of the display apparatus embodying the invention;

[Fig. 5] A plan view showing another protective member of the display apparatus embodying the invention;

[Fig. 6] A plan view showing another protective member of the display apparatus embodying the invention;

[Fig. 7] A diagram showing another diffusion-plate supporting pin of the display apparatus embodying the invention;

[Fig. 8] A diagram showing another diffusion-plate supporting pin of the display apparatus embodying the invention; and

[Fig. 9] A side sectional view showing a conventional display apparatus.

## List of Reference Symbols

| | |
|---|---|
| 1 | display apparatus |
| 2 | display panel |
| 3 | lighting apparatus |
| 4 | back chassis |
| 5 | light source |
| 6 | supporting member |
| 7 | diffusion plate |
| 8 | optical sheet |
| 9 | connecting portion |
| 10 | diffusion-plate supporting pin |
| 10a | projection |
| 11 | protective member |

## Best Mode for Carrying Out the Invention

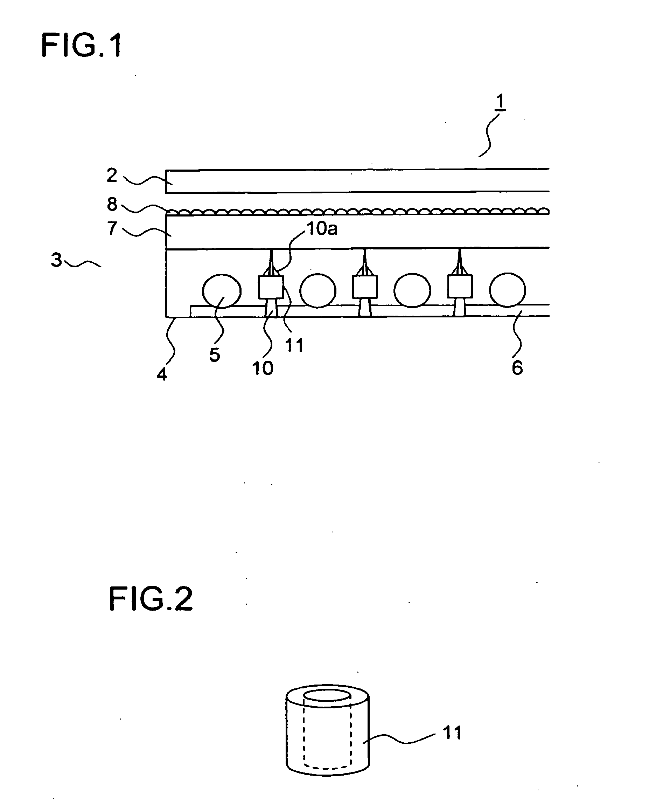

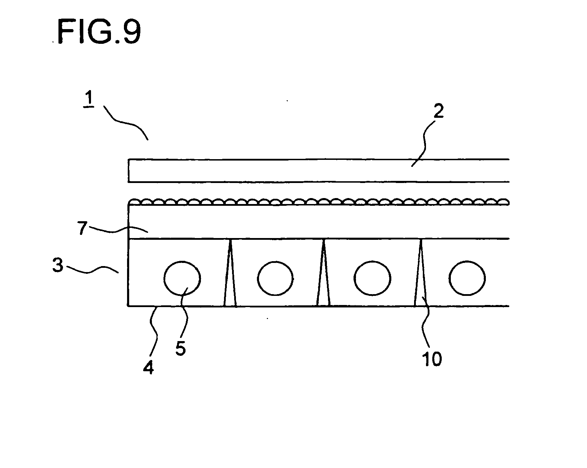

Hereinafter, an embodiment of the present invention will be described with reference to the accompanying drawings. For convenience of description, such parts as find their counterparts in the above-mentioned conventional example shown in Fig. 9 are identified by common reference signs. Fig. 1 is a side sectional view showing a display apparatus according to one embodiment. A display apparatus 1, such as a television receiver or a display, has a lighting apparatus 3 arranged at the back of a display panel 2. The display panel 2 is built with a liquid crystal panel or the like that has a pair of substrates with liquid crystal sealed in between. The display panel 2 has pixels arranged in a matrix, and light emitted from the lighting apparatus 3 transmits a predetermined pixel of the display panel 2 so that images are displayed.

The lighting apparatus 3 is provided with a back chassis 4 - formed of metal -, which is open at its front and covers the rear side of the lighting apparatus 3. By forming the back chassis 4 with metal, it is possible to obtain a desired strength with a decreased thickness thereof, and thus to achieve a compact lighting apparatus 3. Inside the back chassis 4, a light source 5 is disposed. The light source 5 comprises a plurality of cylindrical fluorescent tubes having parts extending in one direction arranged at a predetermined interval (period) in the direction perpendicular to the direction of extension. The light source 5 may be arranged side by side at a predetermined interval by composing them with one or more meandering fluorescent tubes.

At the open side of the back chassis 4, a diffusion plate 7 that faces the light source 5 is disposed. The diffusion plate 7 is formed of a plate-like transmissive member holding a diffusion member, and diffuses light emitted from the light source 5. The diffusion plate 7 has its peripheral portion held by the back chassis 4, and is supported by a diffusion-plate supporting pin 10 fitted to the back chassis 4.

The diffusion-plate supporting pin 10 is formed out of a conical resin component having a sharp point, and is fitted to, with a claw portion (unillustrated) at its back engaged with, the back chassis 4. As the diffusion-plate supporting pin 10, a plurality of them are provided between parts of the light source 5 having a plurality of fluorescent tubes or a meandering fluorescent tube arranged side by side, so that the diffusion plate 7 and the light source 5 are kept apart. In this way, it is possible to prevent the light source 5 reflected in display images, which is caused by the diffusion plate 7 being thermally deformed by the heat from the light source 5 and coming close to the light source 5.

Around the diffusion-plate supporting pin 10, a protective member 11 is arranged. Fig. 2 is a perspective view showing the protective member 11. The protective member 11 is formed into a tubular shape and, as described in detail below, is formed of a shock-absorbing material absorbing shock by elasticity.

On the circumferential surface of the diffusion-plate supporting pin 10, a projection 10a that projects in the radius direction is provided. The tubular protective member 11 is put on the diffusion-plate supporting pin 10 from its tip past the projection 10a, to be arranged on the base side of the projection 10a. In this way, the protective member 11 is locked at its diffusion plate 7-side by the projection 10a, so that it does not come off.

On the diffusion plate 7, an optical sheet 8 such as a prism sheet or a lens sheet is arranged. The optical sheet 8 focuses light emitted from the diffusion plate 7 in a range of a predetermined view angle.

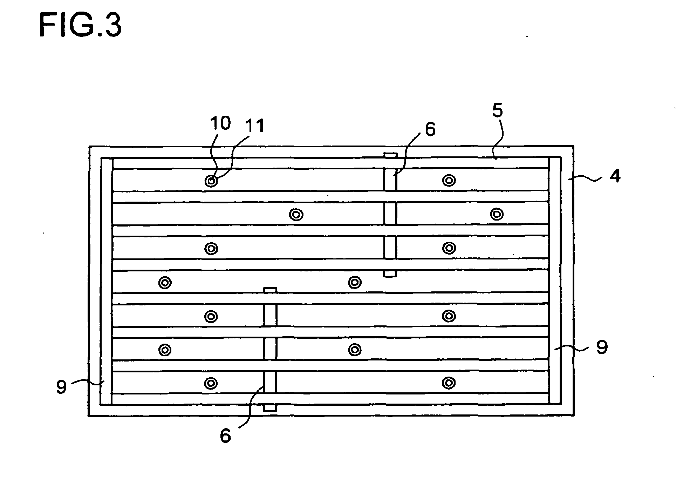

Fig. 3 is a plan view showing how the light source 5 is supported inside the back chassis 4. At opposite side portions of the back chassis 4, connecting portions 9 that hold opposite end portions of the light source 5 to feed electric power to it are arranged. By the connecting portions 9, the light source 5 is held in the back chassis 4. In addition, the back chassis 4 has supporting members 6 laid in it, and on the supporting members 6, the light source 5 is placed. The supporting members 6 are formed of a shock-absorbing material absorbing shock by elasticity.

For the supporting members 6 and the protective member 11, it is possible to use resin, rubber, or the like that is spongy or has cushioning properties. Preferably, for the supporting members 6 and the protective member 11, it is possible to use foamed polyethylene, rubber sponge, silicon-based gel, or the like. Further preferably, for the supporting members 6 and the protective member 11, microcell polymer (for example, PORON manufactured by Rogers Inoac Corporation) is used, since it offers a high shock-absorbing performance.

The supporting members 6 and the protective member 11 are formed to be transparent, white/whitish, or gray/grayish. In this way, it is possible to prevent degraded image quality caused by the supporting members 6 and the protective member 11 reflected in the display panel 2. Note that white/whitish include not only white but also pale yellow etc.; gray/grayish include pale gray and dark gray.

The light source 5 is connected to the connecting portions 9 with the light source 5 pressing the supporting members 6 and the supporting members 6 being contracted. As a result, parts of the light source 5 each has part of a circumferential surface thereof, which is smaller than half the circumference thereof, in contact with the supporting members 6, and thus the light source 5 has its part between the opposite end portions supported by the supporting members 6.

Consequently, movement of the light source 5 towards the back chassis 4 is prevented by the elastic behavior of the supporting members 6, and that towards the adjacent light source 5 is prevented by the frictional force of the supporting members 6. Moreover, when shock acts on the display apparatus 1, the shock force is absorbed by the supporting members 6. It is therefore possible to prevent deflection of the light source 5 caused by its own weight, and to prevent breakage of the light source 5 caused by its colliding with the back chassis 4 due to shock etc. during transportation.

Moreover, the light source 5 is supported by the supporting members 6 with smaller contact area. Thus, the amount of heat dissipated from the light source 5 via the supporting members 6 is reduced, and a drop in brightness in parts of the light source in contact with the supporting members 6 can be prevented. This makes it possible to illuminate the display panel 2 with uniform brightness, and thus to achieve satisfactory display images. The supporting members 6 may support a plurality of parts of the light source 5, or one place in a center part of the light source 5.

In the display apparatus 1 arranged as described above, light emitted from the light source 5 enters the diffusion plate 7. The light incident on the diffusion plate 7 is diffused, and the light so diffused enters the optical sheet 8. The light incident on the optical sheet 8 has its advancing direction adjusted to be in a desired range of view angle, and irradiates the display panel 2. This makes images on the display panel 2 viewable.

According to the embodiment, the protective member 11 arranged around the diffusion-plate supporting pin 10 that supports the diffusion plate 7 is formed of a shock-absorbing material; thus, it is possible to prevent breakage of the light source 5 caused by its colliding with the diffusion-plate supporting pin 10 when shock acts on the lighting apparatus 3.

When parts of the light source 5 are each regarded as a simple beam, the maximum amount of deflection $\delta$ (mm) of a part (of the light source 5) is expressed by formula (1). M (g) represents the mass of the part (of the light source 5), $\alpha$ (m/s$^2$) represents the acceleration acting on the part (of the light source 5), 1 (mm) represents the length of the part (of the light source 5), and E (GPa) represents Young's modulus. In addition, I (m$^4$) represents the second moment of area of the part (of the light source 5) and, suppose the part (of the light source 5) is a hollow rod with an inside diameter and an outside diameter of a (mm) and b (mm), respectively, I (m$^4$) is then expressed by formula (2).

$$\delta = 5M\alpha l^3 / (384EI) \quad \cdots \quad (1)$$

$$I = \pi (b^4 - a^4) / 64 \quad \cdots \quad (2)$$

Accordingly, the protective member 11 may be provided when the amount of deflection $\delta$ due to the acceleration $\alpha$ caused by shock acting on the lighting apparatus 3 is larger than the distance between parts of the light source 5 and the diffusion-plate supporting pin 10.

When the display apparatus 1 is arranged such that a display screen is vertical, parts of the light source 5 extend in the horizontal direction arranged side by side in the vertical direction. Thus, when the light source 5 deflects due to its own weight, it is likely to collide with the diffusion-plate supporting pins 10. However, thanks to the provision of the protective member 11, breakage of the light source 5 can be surely prevented. Note that the amount of deflection $\delta$ of the light source 5 due to its own weight can be obtained by substituting the acceleration of gravity g (m / s$^2$) for the acceleration $\alpha$ in formula

(1).

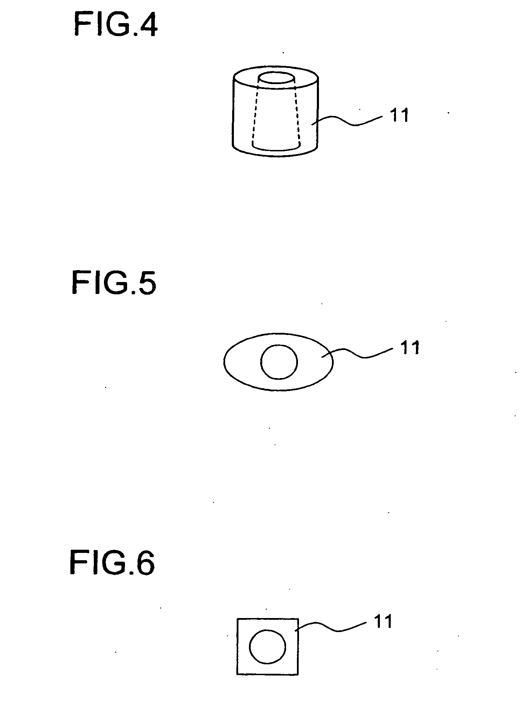

In the embodiment, the protective member 11 or the diffusion-plate supporting pin 10 may have other shapes. For example, as shown in Fig. 4, the inner circumferential surface of the tubular protective member 11 may be formed to have a taper shape that matches the outer circumferential surface of the diffusion-plate supporting pin 10. This makes it possible for the protective member 11 to be positioned in the height direction easily. In addition, the area increases where the diffusion-plate supporting pin 10 is in contact with the protective member 11, and, by friction, it is possible to easily prevent the protective member 11 from coming off. Moreover, as shown in plan views of Figs. 5 and 6, the protective member 11 may have an elliptic or a rectangular sectional shape.

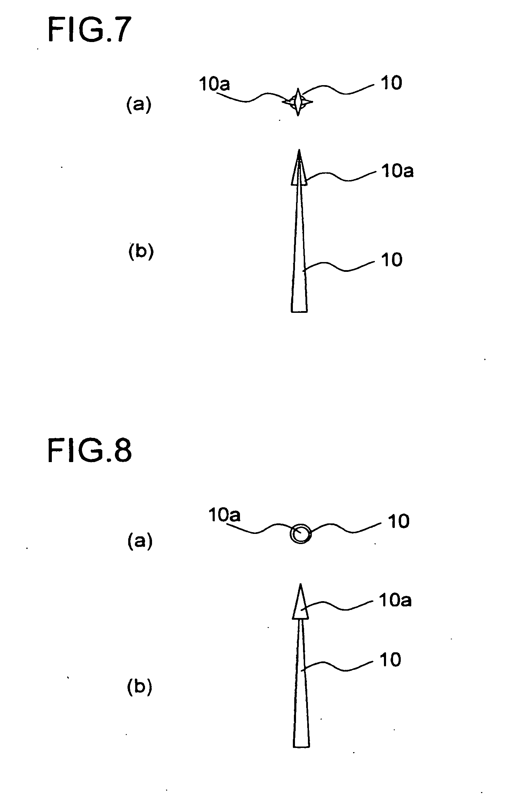

Moreover, as shown in Fig. 7, an arrow-headed projection 10a may be formed at the tip of the diffusion-plate supporting pin 10. As shown in Fig. 8, a conical projection 10a may be formed at the tip of the diffusion-plate supporting pin 10. Note that in Figs. 7 and 8, (a) is a plan view and (b) is a side view.

**Industrial Applicability**

The present invention can be used in lighting apparatuses that illuminate display panels such as liquid crystal panels, and in display apparatuses such as television receivers and displays that employ such lighting apparatuses.

**Claims**

1. A lighting apparatus (3) comprising:

   a light source (5) comprising a fluorescent tube having parts extending in one direction arranged side by side in a direction perpendicular to a direction of extension;
   a back side chassis (4) covering a rear side of the light source (5) and holding the light source (5);
   a diffusion plate (7) arranged to face the light source (5) to diffuse light emitted from the light source (5);
   a diffusion-plate supporting pin (10) arranged upright between adjacent parts of the light source (5) to support the diffusion plate (7); and
   a protective member (11) arranged around the diffusion-plate supporting pin (10) in a radius direction relative to the diffusion-plate supporting pin (10) and formed of a shock absorbing material absorbing shock by elasticity so as to protect the diffusion-plate supporting pin from collision with the light source (5).

2. The lighting apparatus (3) according to claim 1,

wherein a projection (10a) is provided on a circumferential surface of the diffusion-plate supporting pin (10), and the protective member (11) through which the diffusion-plate supporting pin (10) is inserted has a diffusion plate-side thereof locked by the projection (10a).

3. The lighting apparatus(3) according to claim 1, wherein an outer circumferential surface of the diffusion-plate supporting pin (10) is formed to have a taper shape, and an inner circumferential surface of the protective member (11) through which the diffusion-plate supporting pin (10) is inserted is formed to have a taper shape.

4. The lighting apparatus (3) according to claim 1, wherein a concave part and a convex part are formed at an outer circumferential surface of the protective member (11) through which the diffusion-plate supporting pin (10) is inserted.

5. The lighting apparatus (3) according to claim 1, wherein the parts of the light source (5) extend in a horizontal direction arranged side by side in a vertical direction.

6. The lighting apparatus (3) according to claim 1, wherein the protective member (11) is formed to be transparent, white/whitish, or gray/grayish.

7. The lighting apparatus (3) according to claim 1, wherein the protective member (11) is formed of microcell polymer.

8. The lighting apparatus (3) according to claim 1, wherein the protective member (11) is formed of foamed polyethylene.

9. The lighting apparatus (3) according to claim 1, wherein the protective member (11) is formed of rubber sponge.

10. The lighting apparatus (3) according to claim 1, wherein the protective member (11) is formed of silicon-based gel.

11. A display apparatus (1) comprising:

    the lighting apparatus (3) according to claim 1; and
    a display panel (2) facing the diffusion plate (7).

12. The display apparatus (1) according to claim 11, wherein the display panel (7) is built with a liquid crystal panel having a pair of substrates with liquid crystal sealed in between.

13. A television receiver comprising the display apparatus (1) according to claim 11.

## Patentansprüche

1. Beleuchtungsvorrichtung (3), umfassend:

   eine Lichtquelle (5), die eine Fluoreszenzröhre mit Teilen, die sich in einer Richtung erstrecken, umfasst, die nebeneinander in einer Richtung senkrecht zu einer Richtung der Extension angeordnet sind;
   ein Rückseitengehäuse (4), das die rückwärtige Seite der Lichtquelle (5) abdeckt und die Lichtquelle (5) hält;
   eine Diffusionsplatte (7), die gegenüber der Lichtquelle (5) angeordnet ist, um Licht, das von der Lichtquelle (5) emittiert wird, zu diffundieren;
   einen Diffusionsplattenstützstift (10), der aufrecht zwischen benachbarten Teilen der Lichtquelle (5) angeordnet ist, um die Diffusionsplatte (7) zu stützen; und
   ein Schutzteil (11), das um den Diffusionsplattenstützstift (10) in einer Radiusrichtung relativ zum Diffusionsplattenstützstift (10) angeordnet ist und aus einem Schlag absorbierenden Material, das Schläge durch Elastizität absorbiert, ausgebildet ist, um den Diffusionsplattenstützstift (10) von einer Kollision mit der Lichtquelle (5) zu schützen.

2. Beleuchtungsvorrichtung (3) nach Anspruch 1, wobei ein Überstand (10a) auf einer Umfangsoberfläche des Diffusionsplattenstützstifts (10) ausgebildet ist, und das Schutzteil (11), durch das der Diffusionsplattenstützstift (10) eingeführt ist, eine Diffusionsplattenseite davon aufweist, die durch den Überstand (10a) verschlossen ist.

3. Beleuchtungsvorrichtung (3) nach Anspruch 1, wobei eine äußere Umfangsoberfläche des Diffusionsplattenstützstifts (10) so ausgebildet ist, dass er eine konisch zulaufende Form aufweist, und eine innere Umfangsoberfläche des Schutzteils (11), durch die der Diffusionsplattenstützstift (10) eingeführt ist, so ausgebildet ist, dass es eine konisch zulaufende Form aufweist.

4. Beleuchtungsvorrichtung (3) nach Anspruch 1, wobei ein konkaves Teil und ein konvexes Teil an einer äußeren Umfangsoberfläche des Schutzteils (11) ausgebildet sind, durch das der Diffusionsplattenstützstift (10) eingeführt ist.

5. Beleuchtungsvorrichtung (3) nach Anspruch 1, wobei die Teile der Lichtquelle (5), die in einer horizontalen Richtung sich erstrecken, nebeneinander in einer vertikalen Richtung angeordnet sind.

6. Beleuchtungsvorrichtung (3) nach Anspruch 1, wobei das Schutzteil (11) so ausgebildet ist, dass es transparent, weiß/weißlich oder grau/gräulich ist.

7. Beleuchtungsvorrichtung (3) nach Anspruch 1, wobei das Schutzteil (11) aus einem mikrozellulären Polymer ausgebildet.

8. Beleuchtungsvorrichtung (3) nach Anspruch 1, wobei das Schutzteil (11) aus geschäumten Polyethylen ausgebildet ist.

9. Beleuchtungsvorrichtung (3) nach Anspruch 1, wobei das Schutzteil (11) aus einem Gummischwamm ausgebildet ist.

10. Beleuchtungsvorrichtung (3) nach Anspruch 1, wobei das Schutzteil (11) aus einem auf Silizium basierenden Gel ausgebildet ist.

11. Anzeigevorrichtung (1), umfassend:

    eine Beleuchtungsvorrichtung (3) nach Anspruch 1; und
    eine Anzeigentafel (2) gegenüber der Diffusionsplatte (7).

12. Anzeigevorrichtung (1) nach Anspruch 11, wobei die Anzeigentafel (2) aus einem Flüssigkristallbauteil mit einem Paar von Substraten mit Flüssigkristallen, die dazwischen eingeschlossen sind, aufgebaut ist.

13. Fernsehempfänger, umfassend die Anzeigevorrichtung (1) nach Anspruch 11.

## Revendications

1. Appareil d'éclairage (3) comprenant :

   une source de lumière (5) comprenant un tube fluorescent comportant des parties s'étendant dans une direction particulière agencées côte à côte dans une direction perpendiculaire à une direction d'extension ;
   un châssis de dos (4) couvrant un côté arrière de la source de lumière (5) et maintenant la source de lumière (5) ;
   une plaque de diffusion (7) agencée pour faire face à la source de lumière (5) pour diffuser une lumière émise à partir de la source de lumière (5) ;
   un ergot de support de plaque de diffusion (10) agencé à la verticale entre des parties adjacentes de la source de lumière (5) pour supporter la plaque de diffusion (7) ; et
   un élément protecteur (11) agencé autour de l'ergot de support de plaque de diffusion (10), dans une direction de rayon par rapport à l'ergot de support de plaque de diffusion (10), et formé dans une matière absorbant les chocs pour absorber les chocs par élasticité de façon à protéger l'ergot de support de plaque de diffusion (10) d'une collision avec la source de lumière (5).

2. Appareil d'éclairage (3) selon la revendication 1, dans lequel une partie en saillie (10a) est prévue sur une surface circonférentielle de l'ergot de support de plaque de diffusion (10), et l'élément protecteur (11) à travers lequel l'ergot de support de plaque de diffusion (10) est inséré présente un côté plaque de diffusion de ce dernier verrouillé par la partie en saillie (10a).

3. Appareil d'éclairage (3) selon la revendication 1, dans lequel une surface circonférentielle extérieure de l'ergot de support de plaque de diffusion (10) est formée pour présenter une forme allant en s'amincissant, et une surface circonférentielle intérieure de l'élément protecteur (11) à travers lequel l'ergot de support de plaque de diffusion (10) est inséré est formée pour présenter une forme allant en s'amincissant.

4. Appareil d'éclairage (3) selon la revendication 1, dans lequel une partie concave et une partie convexe sont formées au niveau d'une surface circonférentielle extérieure de l'élément protecteur (11) à travers lequel l'ergot de support de plaque de diffusion (10) est inséré.

5. Appareil d'éclairage (3) selon la revendication 1, dans lequel les parties de la source de lumière (5) s'étendant dans une direction horizontale sont agencées côte à côte dans une direction verticale.

6. Appareil d'éclairage (3) selon la revendication 1, dans lequel l'élément protecteur (11) est formé pour être transparent, blanc / blanchâtre, ou gris / grisâtre.

7. Appareil d'éclairage (3) selon la revendication 1, dans lequel l'élément protecteur (11) est formé de polymère microcellulaire.

8. Appareil d'éclairage (3) selon la revendication 1, dans lequel l'élément protecteur (11) est formé de polyéthylène alvéolaire.

9. Appareil d'éclairage (3) selon la revendication 1, dans lequel l'élément protecteur (11) est formé de caoutchouc mousse.

10. Appareil d'éclairage (3) selon la revendication 1, dans lequel l'élément protecteur (11) est formé de gel à base de silicium.

11. Appareil d'affichage (1) comprenant :

l'appareil d'éclairage (3) selon la revendication 1 ; et
un écran d'affichage (2) faisant face à la plaque de diffusion (7).

12. Appareil d'affichage (1) selon la revendication 11, dans lequel l'écran d'affichage (2) est construit avec un écran à cristaux liquides comportant un couple de substrats, les cristaux liquides étant scellés entre eux.

13. Récepteur de télévision comprenant l'appareil d'affichage (1) selon la revendication 11.

FIG.1

FIG.2

FIG.3

# FIG.4

11

# FIG.5

11

# FIG.6

11

# FIG.7

(a)

10a — 10

(b)

10a

10

# FIG.8

(a)

10a — 10

(b)

10a

10

# FIG.9

**EP 2 149 741 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005347005 A

- US 2002044437 A1